(19) Europäisches Patentamt

European Patent Office

Office européen des brevets

(11) EP 1 422 203 A1

(12) EUROPEAN PATENT APPLICATION
published in accordance with Art. 158(3) EPC

(43) Date of publication:
26.05.2004 Bulletin 2004/22

(51) Int Cl.7: C03C 15/00, H01L 21/308,
H05B 33/02, H05B 33/10

(21) Application number: 02762954.2

(22) Date of filing: 02.09.2002

(86) International application number:
PCT/JP2002/008868

(87) International publication number:
WO 2003/018501 (06.03.2003 Gazette 2003/10)

(84) Designated Contracting States:
AT BE BG CH CY CZ DE DK EE ES FI FR GB GR
IE IT LI LU MC NL PT SE SK TR

(30) Priority: 31.08.2001 JP 2001265039

(71) Applicant: Stella Chemifa Kabushiki Kaisha
Osaka-shi, Osaka-fu 541-0047 (JP)

(72) Inventors:
• KIKUYAMA, Hirohisa,
STELLA CHEMIFA KABUSHIKI K.
Izumiootsu-shi, Osaka 595-0075 (JP)

• MIYASHITA, Masayuki,
STELLA CHEMIFA KABUSHIKI K.
Izumiootsu-shi, Osaka 595-0075 (JP)
• YABUNE, Tatsuhiro,
STELLA CHEMIFA KABUSHIKI KAISHA
Izumiootsu-shi, Osaka 595-0075 (JP)
• OHMI, Tadahiro
Sendai-shi, Miyagi 980-0813 (JP)

(74) Representative: Dr. Weitzel & Partner
Friedenstrasse 10
89522 Heidenheim (DE)

(54) SURFACE TREATING FLUID FOR FINE PROCESSING OF MULTI&minus;COMPONENT GLASS SUBSTRATE

(57) The object of the present invention is to provide a surface treatment solution for finely processing a glass substrate containing multiple ingredients like the one used for the construction of a liquid crystal-based or organic electroluminescence-based flat panel display device, without evoking crystal precipitation and surface roughness.

An etching solution of the invention contains, in addition to hydrofluoric acid (HF), at least one acid whose dissociation constant is larger than that of HF. The concentration of the acid in the solution is adjusted as follows. If such an acid-added etching solution with the concentration x of the acid varied is applied to a silicon oxide film heated to as high a temperature as required for etching, and the etching rate $f(x)$ [Å/min] is plotted as a function of the concentration x of the acid in the solution, and it is found that $f(x)$ takes a minimum $f(x_1)$ when $x = x_1$, and the concentration x of the acid which gives $f(x)$ equal to $f(x=0)=\{f(x_2)\}/2$ is taken as $x_2$, the concentration x of the acid in the solution is adjusted to be $(2/5)^*x_1 < x < x_2$.

Fig.1

**Description**

Technical Field

The present invention relates to a surface treatment solution for finely processing the surface of a glass substrate containing multiple ingredients. More specifically, the present invention relates to a surface treatment solution useful for the fine surface processing of glass substrates containing cation-yielding elements and their cation-yielding oxides, which is very profitably used for wet-etching/cleaning the surface of such glass substrates, or etching/cleaning the surface of such glass substrates carrying finely fabricated semiconductor elements thereon during the fabrication of semiconductor devices.

Background Art

In the wet processing of glass panels for flat panel display devices, pattern-etching/cleaning of glass substrates containing cation-yielding elements and their cation-yielding oxides, and purification/fine-processing of pattern-etched such glass substrates using an etching solution have been put into practice, and demand for a technique enabling the more fine processing of glass substrates becomes increasingly acute with the advent of more highly resolved display devices. For the fine surface processing of glass substrates which will serve as display panels, hydrofluoric acid (HF) or a mixture (buffered hydrofluoric acid (BHF)) of hydrofluoric acid (HF) and ammonium fluoride ($NH_4F$) has been used as an important and indispensable agent for etching/cleaning glass substrates. However, demand for an etching agent enabling finer processing of glass substrates becomes manifest to further improve the performance and resolution of display devices.

Glass substrates to be used for the construction of liquid crystal (LC)-based or organic electroluminescence (EL)-based flat panel display devices come to have an increasingly reduced thickness to meet the demand for more compact and power-saving display devices. In the manufacture of such glass substrates, however, the so-called mother glass plate has an increasingly larger size to improve the production efficiency and reduce the production cost. A glass substrate is obtained by thinning a mother glass plate. However, the mechanical thinning of a mother glass plate has a limitation, because a mother glass plate must have a strength sufficiently high to withstand stresses imposed during the thinning process. Therefore, if further thinning is required for a mechanically thinned glass plate (coarse glass substrate), the coarse glass substrate must be subjected to another kind of fine processing, e.g., chemical fine processing.

However, if a coarse glass substrate containing multiple ingredients, particularly cation-yielding elements and their oxides, is etched/cleaned by means of a conventional etching solution comprising HF or BHF, following two problems are encountered which interfere with the uniform etching/cleaning.

1) Crystals develop on the surface of a glass substrate and adhere thereto.
2) The surface of a glass substrate becomes significantly roughened after the treatment.

With regard to the problem 1), analysis of crystals adhered to the surface of a glass substrate revealed that it is composed of fluorides of cation-yielding elements contained in the glass substrate. Fluorides of cation-yielding elements have such a low solubility to HF and BHF as well as to water, that they are easily crystallized to adhere onto the surface of a glass substrate.

The problem 2) was ascribed to that crystals developed on the surface of a glass substrate and adhered thereto interfere with surface etching, and/or, that cation-yielding elements and their oxides contained in a glass substrate are differently susceptible to etching, which causes the local variation in etching rate and etching amount.

The most important point of the technique for finely processing glass substrates is to uniformly process or treat glass substrates while preventing the occurrence of surface roughness.

The object of the present invention is to provide a surface treatment solution for uniformly processing the surface of glass substrates containing multiple ingredients such as glass substrates to be used for the construction of LC-based or organic EL-based flat panel display devices, with which it is possible to etch such glass substrates without invoking crystal precipitation and surface roughness.

Disclosure of Invention

The present inventors had studied hard to solve the above problems, and found that it is possible to solve the above problems by providing a surface treatment solution which is specifically adapted for the fine processing of glass substrates containing multiple ingredients, the treatment solution containing, in addition to HF, at least one acid whose dissociation constant is larger than that of HF. This finding led the inventors to the present invention.

A first aspect of the present invention is to provide a surface treatment solution for finely processing a glass substrate containing multiple ingredients in a uniform mixture, in addition to F⁻ ions, at least one acid whose dissociation constant is larger than that of HF.

A second aspect of the present invention is to provide a surface treatment solution for finely processing a glass substrate containing multiple ingredients in a uniform mixture, in addition to HF, at least one acid whose dissociation constant is larger than that of HF.

A third aspect of the present invention is to provide a surface treatment solution for finely processing a glass substrate containing multiple ingredients in a uniform mixture, in addition to HF, at least one acid whose dissociation constant is larger than that of HF such that, if the solution is applied to a heated silicon oxide film having a certain thickness, and the etching rate $f(x)$ [Å/min] is plotted as a function of the concentration $x$ [mol/kg] of the acid in the solution, $f(x)$ takes a minimum $f(x_1)$ when $x = x_1$.

A fourth aspect of the present invention is to provide a surface treatment solution for finely processing a glass substrate containing multiple ingredients in a uniform mixture, in addition to HF, at least one acid whose dissociation constant is larger than that of HF such that, if the solution is applied to a heated silicon oxide film having a certain thickness, and the etching rate $f(x)$ [Å/min] is plotted as a function of the concentration $x$ [mol/kg] of the acid in the solution, and it is found that $f(x)$ takes a minimum $f(x_1)$ when $x = x_1$, the concentration $x$ of the acid in the solution is adjusted to be $x > (2/5)^*x_1$.

A fifth aspect of the present invention is to provide a surface treatment solution for finely processing a glass substrate containing multiple ingredients in a uniform mixture, in addition to HF, at least one acid whose dissociation constant is larger than that of HF such that, if the solution is applied to a heated silicon oxide film having a certain thickness, and the etching rate $f(x)$ [Å/min] is plotted as a function of the concentration $x$ [mol/kg] of the acid in the solution, and it is found that $f(x_2)$ or the etching rate when $x = x_2$ is equal to $f(x=0)=\{f(x_2)/2\}$, the concentration $x$ of the acid in the solution is adjusted to be $x < x_2$.

A sixth aspect of the present invention is to provide a surface treatment solution for finely processing a glass substrate containing multiple ingredients in a uniform mixture, in addition to HF, at least one acid whose dissociation constant is larger than that of HF such that, if the solution is applied to a heated silicon oxide film having a certain thickness, the etching rate $f(x)$ [Å/min] is plotted as a function of the concentration $x$ [mol/kg] of the acid in the solution, and it is found that $f(x)$ takes a minimum $f(x_1)$ when $x = x_1$, and $f(x_2)$ or the etching rate when $x = x_2$ is equal to $f(x=0) =\{f(x_2)/2\}$, the concentration $x$ of the acid in the solution is adjusted to be $(2/5)^*x_1 < x < x_2$.

A seventh aspect of the present invention is to provide a surface treatment solution as described in any one of the foregoing aspects for finely processing a glass substrate containing multiple ingredients in a uniform mixture, in addition to HF, at least one inorganic acid either monovalent or multivalent whose dissociation constant is larger than that of HF.

An eighth aspect of the present invention is to provide a surface treatment solution as described in any one of the foregoing aspects for finely processing a glass substrate containing multiple ingredients wherein the acid whose dissociation constant is larger than that of HF is one or more chosen from the group comprising HCl, HBr, $HNO_3$, and $H_2SO_4$.

A ninth aspect of the present invention is to provide a surface treatment solution as described in any one of the foregoing aspects for finely processing a glass substrate containing multiple ingredients which further contains a surfactant at 0.0001 to 1 wt%.

A tenth aspect of the present invention is to provide a surface treatment solution as described in any one of the foregoing aspects for finely processing a glass substrate containing multiple ingredients, particularly a glass substrate which contains, in addition to silicates or its main ingredient, at least one or more elements chosen from the group comprising Al, Ba, Ca, Mg, Sb, Sr and Zr.

An eleventh aspect of the present invention is to provide a surface treatment solution as described in any one of the foregoing aspects for finely processing a glass substrate containing multiple ingredients, particularly a glass substrate used for the construction of a flat panel display device.

A twelfth aspect of the present invention is to provide a surface treatment solution as described in any one of the foregoing aspects for finely processing a glass substrate containing multiple ingredients which contains HF at 8 mol/kg or lower.

Brief Description of the Drawings

Fig. 1 shows, when etching solutions containing an acid, HCl, whose dissociation constant is larger than that of HF at different concentrations, are applied to a heated silicon oxide film and a glass substrate, and the changes of etching rate are traced, a graph relating the etching rate $f(x)$ of the silicon oxide film with the concentration of $x$

of the acid in the solution, and a graph relating the etching rate of the glass substrate with the concentration x of the acid in the solution.

Fig. 2 shows, when acid-added etching solutions with the concentration of acid in the solution being varied are applied to a glass substrate containing Al compounds, dots relating the concentration of Al ions in the solution with the etched amount.

Fig. 3 shows, when acid-added etching solutions with the concentration of acid in the solution being varied are applied to a glass substrate containing Ba compounds, dots relating the concentration of Ba ions in the solution with the etched amount.

Fig. 4 shows, when acid-added etching solutions with the concentration of acid in the solution being varied are applied to a glass substrate containing Ca compounds, dots relating the concentration of Ca ions in the solution with the etched amount.

Fig. 5 shows, when acid-added etching solutions with the concentration of acid in the solution being varied are applied to a glass substrate containing Sr compounds, dots relating the concentration of Sr ions in the solution with the etched amount.

Best Mode for Carrying Out the Invention

The present invention will be detailed below. First, the present inventors inquired the causes responsible for the formation of crystals and surface roughness, and obtained following findings.

As a result of etching, metal elements contained in a glass substrate dissolve in an etching solution to turn into cations there. Those cations derived from the etched glass substrate react with anions existing in the etching solution. For example, the cations react with fluorine ion ($F^-$ ion) to produce metal salts (e.g., fluoride salts). As metal salts are hardly soluble to the etching solution, they crystallize on the surface of the substrate and deposit there. This crystal deposition on the surface of a glass substrate interferes with surface etching which causes the etched surface to be roughened, and the overall glass surface to look cloudy.

If etching is performed on a glass substrate containing multiple ingredients such as cation-yielding elements and their oxides, etching proceeds at widely different speeds according to localities because of ingredients contained in the substrate being greatly different in their susceptibility to etching, which may cause the etched surface to be roughened and irregular in profile.

To solve these problems, it is necessary to make uniform the susceptibilities of different ingredients contained in a glass substrate to etching, and to inhibit the development of fluorides insoluble to an etching solution which are derived from the cations emerging as a result of dissolution of the ingredients to the etching solution. For this purpose, it is most important and desirable to allow the ingredients, once they are dissolved in an etching solution, to stably stay there as ions.

An effective measure for inhibiting the development of fluorides which are hardly soluble to an etching solution is to modify the reaction system in such a manner as to lower the concentration of $F^-$ ion in the etching solution.

However, since the main ingredient of a glass substrate is silicon oxides, in order to etch a glass substrate having such a composition, the etching solution must include substances such as HF or BHF that can dissolve silicon oxides.

On the other hand, $HF^{2-}$ ion acts as a dominant ion in the etching of silicon oxides.

Accordingly, in order to uniformly etch a glass substrate containing multiple ingredients, it is necessary not only to reduce the concentration of $F^-$ ions in an etching solution but also to promote the efficient generation of $HF^{2-}$ ions in the solution. This purpose can be achieved by adding an appropriate amount of acid whose dissociation constant is larger than that of HF, to an etching/cleaning solution including at least either HF or $NH_4F$, because then the dissociation of HF in the solution (or the concentration of $F^-$ ions in the solution) will become controllable. On the contrary, if an acid whose dissociation constant is equal to or less than that of HF, is added to the same etching/cleaning solution, the efficient production of $HF^{2-}$ will be hardly achievable.

The concentration of $F^-$ ions in an etching solution can be determined with an $F^-$ ion meter (Orion Co.).

In view of this, an etching solution according to the invention must include, in addition to HF, at least one acid (high-ionizing acid) which has a larger dissociation constant than HF.

An etching solution of the invention for glass substrates containing multiple ingredients preferably contains an acid (high-ionizing acid) whose dissociation constant is larger than that of HF at a concentration of x [mol/kg.]. The performance of an etching solution containing a high-ionizing acid may be evaluated by plotting the etching rate $f(x)$ [Å/min] as a function of the concentration x [mol/kg] of the acid. In an acid-added etching solution, $f(x)$ takes a minimum $f(x_1)$ when $x = x_1$. Then, the added amount of a high-ionizing acid should be adjusted such that the concentration x of the acid in the solution satisfies $x > (2/5)*x_1$, because then the solubility of salts of cations derived from a glass substrate to the etching solution is enhanced. Also, when $f(x_2)$ or the etching rate when $x = x_2$ is equal to $f(x=0)=\{f(x_2)/2\}$, the concentration x of the acid in the solution is adjusted to be $x < x_2$, because then the micro-roughness of an etched glass surface is inhibited.

Next, the reason for the added amount of a high-ionizing acid being necessary to be adjusted to make the concentration x of the acid in the solution fall in the above range will be described.

In an etching solution comprising HF, HF dissociates into positive and negative ions, and thus $F^-$ ions are produced. If an acid (high-ionizing acid) whose dissociation constant is larger than that of HF is added to the etching solution, $HF^{2-}$ ions dissociate into HF and $F^-$ ion in order to maintain a renewed acid-base balance. The newly produced $F^-$ ions react with $H^+$ ions introduced with the addition of the acid to produce HF according to the newly introduced dissociation-binding kinetics.

As a consequence, $HF^{2-}$ ions become dominant with the increased addition of an acid. If the performance of such an acid-added etching solution is evaluated by applying the solution to a heated silicon oxide film, and by plotting the etching rate $f(x)$ as a function of the concentration $(x)$ of the acid, the etching rate $f(x)$ decreases with the increase of x, and reaches a minimum $f(x_1)$ at a certain value of x ($x = x_1$).

However, if the concentration x is further increased, the etching rate $f(x)$ starts to rise again, and reaches a point ($x = x_2$) where $f(x_2)$ or the etching rate when $x = x_2$ is equal to $f(x=0)=f(x_2)$. With the still further increase of the concentration x of the acid, the etching rate $f(x)$ steadily rises.

As seen from the above description, it is possible to control the dissociation state of ions in an etching solution, particularly to reduce the concentration of $F^-$ ions in the solution, by adding an acid whose dissociation constant is larger than that of HF to the solution.

If, in an evaluation study as above, the etching rate $f(x)$ takes a minimum $f(x_1)$ when $x = x_1$, and addition of a high-ionizing acid to an etching solution is adjusted to make $x > (2/5)^*x_1$, the concentration of $F^-$ ions in the solution is reduced, and thus the possibility of cations derived from the ingredients of a glass substrate of turning into fluorides as a result of the reaction with $F^-$ ions in the solution is also reduced.

Preferably, addition of a high-ionizing acid to an etching solution is performed such that the concentration x of the acid in the solution satisfies $(2/5)^*x_1 < x < x_2$. Because then the resulting etching solution will be able to inhibit the deposition of crystals on the surface of a glass substrate which may cause surface roughness, and to allow the surface to maintain the original transparency. The concentration x of a high-ionizing acid in an etching solution is more preferably:

$$(1/2)^*x_1 < x < x_1 + (x_2 - x_1)^*(3/5),$$

or most preferably:

$$(3/5)^*x_1 < x < x_1 + (x_2 - x_1)/2.$$

The species of acid is not limited to any specific one, but may include inorganic acids such as hydrochloric acid, nitric acid, sulfuric acid, hydrobromic acid and the like, and organic acids such as oxalic acid, tartaric acid, iodoacetic acid, fumaric acid, maleic acid and the like. Preferably, the acid is a hydrophilic acid, because it facilitates, when added to an etching solution, the uniform dispersal of the solutes of the solution. Preferably, the acid is an inorganic acid because it, when added to an etching solution, can prevent the etched surface from being contaminated by organic materials. Among inorganic acids, hydrochloric acid, nitric acid, sulfuric acid and hydrobromic acid are most preferred because they have a higher dissociation constant.

The acid may include multivalent acids as well as monovalent acids. The use of a multivalent acid may be advantageous because it gives a larger amount of $H^+$ ions at a given concentration.

To achieve the effect according to the invention, hydrochloric acid (HCl) is particularly preferred because of its most balanced action. However, the preferable species of acid should be determined in accordance with the cation-yielding elements and their oxides contained in a glass substrate to be treated together with the concentrations of those elements and oxides.

The acid may include one acid or multiple acids in combination.

Preferably, the etching solution further contains a surfactant to enhance the uniform etching, improve the affinity of the etched surface to a resist, and inhibit the adhesion of foreign particles to the etched surface. The added amount of a surfactant is preferably 0.0001 to 1 wt%.

Once the etching rate $f(x)$ is obtained for a given high-ionizing acid in combination with an etching solution through a preliminary experiment performed on a heated silicon oxide film, it is possible to readily determine the concentration $x_1$ of the acid in the solution at which $f(x)$ takes a minimum, and $x_2$ at which $f(x=0)=\{f(x_2)/2\}$.

If the etching rate $f(x)$ is obtained for a given high-ionizing acid, the concentration x of the acid in an etching solution is preferably in the range of $x > (2/5)^*x_1$, and more preferably $x > x_1/2$, because then the compounds derived from cations obtained as a result of dissolution of ingredients contained in an etched glass substrate become highly soluble to the solution.

If the etching rate f(x) is obtained for a given high-ionizing acid, the concentration x of the acid in an etching solution is preferably chosen to be $(2/5)*x_1 < x < x_2$, because then it is possible to prevent the adhesion of crystal precipitates to the etched surface, and surface roughness, and to maintain the original transparency of the glass substrate throughout the etching process.

The etching solution according to the invention adapted for etching a glass substrate containing multiple ingredients contains, as indispensable components, HF, and a high-ionizing acid whose dissociation constant is higher than that of HF, and may contain, in addition, a surfactant as needed. Still other components may be added to the etching solution, as long as their addition does not interfere with the proper function of the etching solution.

If metal elements are allowed to exist in an etching solution of the invention adapted for etching a glass substrate containing multiple ingredients, the species of the metal elements are not limited to any specific ones but may include any metals, but, in order to ensure the enhanced solubility of the compounds derived from cations obtained as a result of dissolution of ingredients of a glass substrate, and uniform etching of the glass substrate, their concentration is preferably limited to 1 ppb or lower, more preferably 0.5 ppb or lower, most preferably 0.01 ppb or lower.

A glass substrate containing multiple ingredients may contain any metals, as long as its main ingredient is silicate. However, the etching solution of the invention is particularly effective for a glass substrate which contains, as metal elements, one or more chosen from the group comprising Al, Ba, Ca, Mg, Sb, Sr and Zr.

The glass substrate to be treated by an etching solution of the invention preferably includes those used for the construction of flat panel display devices.

The concentration of HF in an etching solution of the invention is preferably 8 mol/kg or lower.

The etching rate of an etching solution increases with the increased concentration of HF in the solution. However, if the etching rate becomes too high, it poses another problem: since salts of cations produced close to the surface of an etched glass substrate have different solubilities to the solution, etching of the glass surface may undergo local variations. To avoid this problem, the concentration of HF in an etching solution is more preferably 5 mol/kg or lower.

EXAMPLES

The method of the invention will be described below more specifically by means of examples. However, the present invention is not limited to those examples.

First, as a fundamental experiment, hydrochloric acid (HCl)-added HF-based etching solutions were prepared with the concentration of HCl being varied. The compositions of the etching solutions and their features are summarized in Table 1 below.

(Table 1)

| HF | HCl | Rate of etching of heated silicon oxide film (at 23°C) | Rate of etching of glass substrate (at 23°C) | Features |
|---|---|---|---|---|
| (mol/kg) | (mol/kg) | (Å/min) | (Å/min) | |
| 1 | 0 | 108 | 2400 | |
| | 0.25 | 96 | 2600 | |
| | 0.5 | 93 | 2900 | Rate of etching of heated oxide film minimum |
| | 0.75 | 95 | 3200 | |
| | 1 | 97 | 3500 | |
| | 2 | 116 | 4500 | |
| | 4 | 182 | 6700 | |
| | 5 | 229 | 7800 | |
| | 6 | 303 | 8900 | |

(Table 1)   (continued)

| HF | HCl | Rate of etching of heated silicon oxide film (at 23°C) | Rate of etching of glass substrate (at 23°C) | Features |
|---|---|---|---|---|
| (mol/kg) | (mol/kg) | (Å/min) | (Å/min) | |
| 3 | 0 | 328 | 7700 | |
| | 0.25 | 322 | 8500 | |
| | 0.5 | 321 | 9500 | Rate of etching of heated oxide film minimum |
| | 0.75 | 322 | 10400 | |
| | 1 | 338 | 11300 | |
| | 2 | 404 | 14900 | |
| | 4 | 641 | 22100 | |
| | 6 | 1004 | 29200 | |
| 5 | 0 | 595 | 12800 | |
| | 0.25 | 596 | 14600 | |
| | 0.5 | 606 | 16600 | |
| | 0.75 | 623 | 18500 | |
| | 1 | 645 | 20500 | |
| | 2 | 781 | 28200 | |
| | 4 | 1278 | 43600 | |
| | 6 | 1928 | 59100 | |

The glass substrate used in the experiment included glass substrates to be incorporated in liquid crystal (LC) displays. The test glass substrates were submitted to EDX (energy dispersion type X-ray analysis) to determine the contents of their ingredients. The results are shown in Table 2.

(Table 2)

| Elements | Atomic weight | Contents of individual elements (wt%) |
|---|---|---|
| Si | 28.09 | 30.43 |
| O | 16.00 | 46.65 |
| Al | 26.98 | 8.74 |
| Ba | 137.33 | 9.42 |
| Ca | 40.08 | 2.25 |
| Ga | 69.72 | 0.26 |
| Mg | 24.31 | 0.25 |
| Sb | 121.75 | 0.11 |
| Sn | 118.71 | 0.19 |
| Sr | 87.62 | 1.6 |
| Zr | 91.22 | 0.1 |

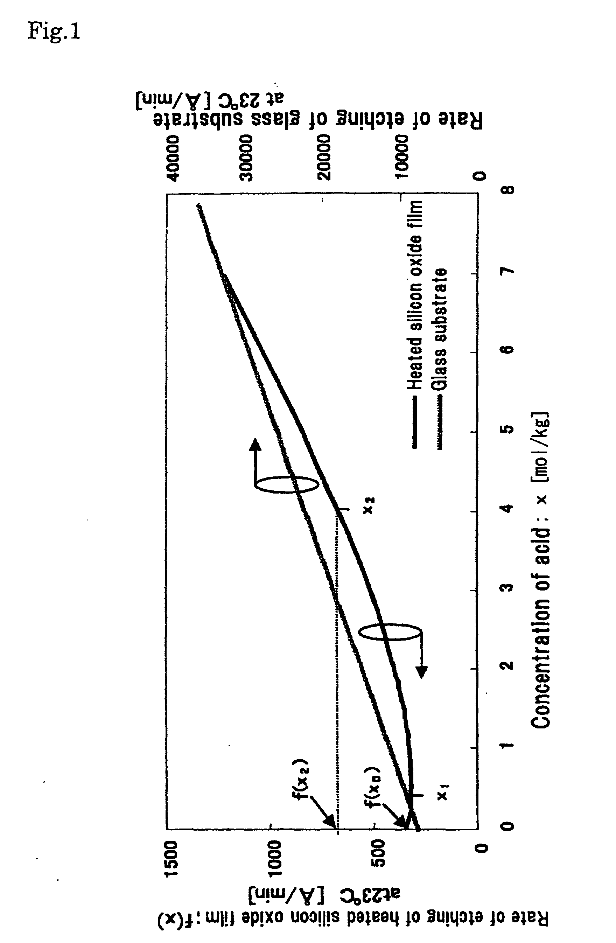

Different amounts of HCl were added to an HF-based etching solution that contained HF at 1 mol/kg as shown in Table 1, and the etching rate f(x) of the resulting solutions (which may be abbreviated as 1/x solutions) was determined by applying the solutions to a heated silicon oxide film at 23°C, and the f(x) was plotted as a function of the concentration x [mol/kg] of HCl in the solution as shown in Fig. 1.

In Fig. 1, $x_1$ represents the concentration of HCl at which the etching rate f(x) determined on a heated silicon oxide film was minimal, and $x_2$ represents the concentration of HCl at which $f(x=0)=\{f(x_2)\}/2$.

An etching solution of the invention having a sufficiently large volume with respect to a glass substrate to be etched was applied to glass substrates which contain a given cation-yielding element at different concentrations, and etching was allowed to proceed for a certain period and then the etching solution was stirred so much that the cation was uniformly dispersed in the solution. The effect of the etched amount on the concentration of the cation in the solution was studied.

The concentration of the cation in an etching solution was determined by ICP-MS (induction-coupled high frequency plasma mass spectroscopy, HP-4500, Yokokawa-Hewlett-Packard).

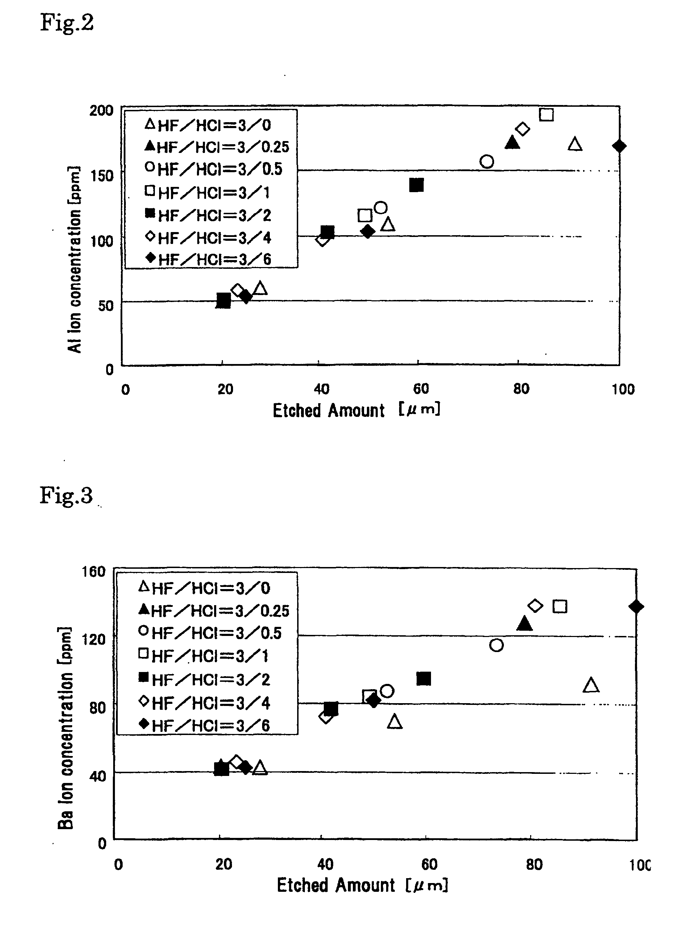

The concentration of Al ions in an etching solution derived from an etched glass substrate was plotted as a function of the etched amount, and the resulting graph is shown in Fig. 2.

From Fig. 2 it is evident that generally the concentration of Al ions in an etching solution linearly increases with the increase of the etched amount. This suggests that Al ions are uniformly dispersed in the etching solution.

Various etching solutions were applied to the same glass substrate comprising Al compounds, and similar relationships were plotted. Then, it was found that certain etching solutions gave the relationships whose gradient is lower than the general linear gradient. This shows that, with the use of such etching solutions, Al compounds contained in the glass substrate dissolve in the etching solution, to produce Al salts (e.g., aluminum fluorides) which, being hardly soluble to the solution, turn into crystals and precipitate as such.

As seen from the above description, it is possible to evaluate, for a given etching solution, the solubility of a cation derived from a glass substrate to the solution by determining the same relationship as above for the etching solution.

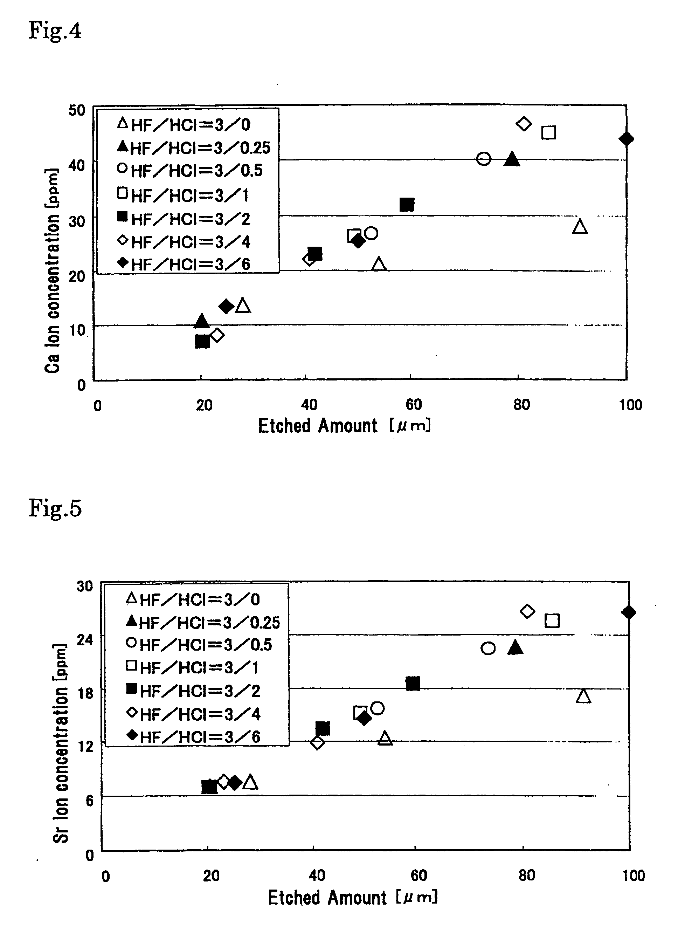

An HF-based etching solution comprising HF at 1.0 mol/kg was prepared, and different amounts of HCl was added to the solution to prepare HF-based etching solutions with the concentration x of HCl being varied. The test etching solutions were applied to a glass substrate containing cation-yielding elements. For each cation species derived from the glass substrate, the relationship of the concentration of HCl in the solution with the etched amount of the substrate was plotted as in Al shown above. Figs. 3, 4 and 5 show the relationships thus obtained for Ba, Ca and Sr, respectively.

Inspection of Figs. 2, 3, 4 and 5 shows that, when the HF-based solutions comprising HF at 1.0 mol/kg where the concentration x of HCl was varied were applied to the glass substrate containing Al, Ba, Ca and Sr as main cation-yielding elements, the solubility of the salts of those elements to the etching solution increases when $x > (2/5)*x_1$.

Further, the HF-based solutions comprising HF at 1.0 mol/kg where the concentration x of HCl was varied were applied to a heated silicon oxide film at 23°C, and their etching rate f(x) was traced. As a consequence it was found that $x_1$ or the concentration of HCl which gave a minimum of f(x) was $x_1 = 0.5$ mol/kg. The concentration x of HCl is preferably chosen to be $x > (2/5)*x_1 = (2/5)*0.5 = 0.2$ mol/kg. Indeed, the graphs show that, if the concentration x of HCl is chosen to be x > 0.2 mol/kg, solubility of the salts of the main cations derived from the glass substrate to the etching solution is enhanced.

Incidentally, the solubility of silicon (Si) and silicates ($SiO_2$) or the main ingredients of a glass substrate to the etching solutions under study was excellent.

With regard to the metal elements contained in a glass substrate, it has been known that their fluorides are more insoluble to water than their other halogenated salts such as chlorides. Thus, if it is possible to introduce a halogen atom other than F in the present reaction system, and to replace thereby part of fluorides with salts of the substitutive halogen, then the crystallization of fluorides of cations (fluorides) derived from a glass substrate which are hardly soluble to water will be effectively avoided.

If HCl is added to an etching solution, $H^+$ ions and $Cl^-$ ions will be added to existent ions in the solution. Addition of $H^+$ ions to the reaction system disturbs the existent dissociation-binding kinetics such that the concentration of $F^-$ ions in the solution is lowered. On the other hand, addition of $Cl^-$ ions produces, instead of fluorides of cations derived from a glass substrate, chlorides of the same cations which are more soluble to the etching solution, which accounts for the reduction of crystal precipitation in an HCl-added etching solution.

It was found, if the acidity contributed by HCl in an etching solution is equal to that of HF, with the increase of the ratio of chloride content to fluorine content (Cl/F ratio), the solubility of halogenated salts to the solution is more enhanced.

The present inventors prepared HCl-added etching solutions with the concentration x of HCl being varied whose composition was as shown in Table 1. The etching solutions were applied to a heated silicon oxide film at 23°C, and the etching rate f(x) was determined as a function of the concentration x [mol/kg] of HCl. Then, they revealed that, if f(x) takes a minimum when $x = x_1$, an etching solution in which the concentration x of HCl is adjusted to be $x > (2/5)*x_1$ gives an environment where the solubility of the salts of cations derived from a glass substrate to the solution is enhanced.

Next, the method of evaluating the micro-roughness of the surface of an etched glass substrate will be disclosed.

An HF-based etching solution comprising HF at 1.0 mol/kg was prepared, to which different amounts of HCl were added to vary its concentration x. The resulting acidified HF-based etching solution was applied to a glass substrate until the surface of the glass substrate was etched away by 25, 50 or 100 μm. The micro-roughness of the etched surface was evaluated by determining the Ra value of the surface. The results are shown in Table 3. The micro-roughness (Ra value) of an etched surface was determined with an instrument adapted for the purpose ($\alpha$-step 250, Tencor).

(Table 3)

| HF | HCl | Micro-roughness of etched glass surface :Ra[A] | | |
|---|---|---|---|---|
| (mol/kg) | (mol/kg) | 25μm etching | 50μm etching | 100μm etching |
| 3 | 0 | 26 | 39 | 62 |
| | 0.25 | 32 | 38 | 59 |
| | 0.5 | 25 | 36 | 61 |
| | 0.75 | 30 | 43 | 72 |
| | 1 | 32 | 49 | 67 |
| | 2 | 38 | 44 | 75 |
| | 3 | 40 | 55 | 79 |
| | 4 | 44 | 62 | 127 |
| | 6 | 126 | 204 | 453 |

It is shown in Table 3 that, with regard to the HF-based etching solutions containing HF at 1.0 mol/kg with different amounts of HCl supplemented, if the concentration x of HCl is x < 4, the increment of micro-roughness with the increase of etched amount is inhibited. The same HF-based etching solutions containing HF at 1.0 mol/kg with the concentration x of HCl being varied were applied to a heated silicon oxide film at 23°C, and the etching rate f(x) as a function of the concentration x [mol/kg] of HCl was determined. Then, the concentration x (= $x_2$) of HCl that gives f(x) equal to 2*{f(x=0)} is found to be 4 mol/kg($x_2$ = 4). This indicates that, if the concentration x of HCl in the etching solution is adjusted to be x < 4, the increment of micro-roughness with the increase of etched amount can be inhibited.

To the HF-based etching solution containing HF at 1.0 mol/kg, $HNO_3$ or $H_2SO_4$ was added instead of HCl and the same type of experiment was carried out. It was found that those acids have the same effect as HCl.

The present inventors applied the various etching solutions whose composition is as shown in Table 1 to glass substrates, and examined the micro-roughness (Ra value) of etched surfaces in the same manner as described above. In a separate experiment, the etching solutions were applied to a heated silicon oxide film at 23°C, and the etching rate f(x) was plotted as a function of the concentration x [mol/kg] of HCl. It was found then that, for a given HCl-added, HF-based etching solution, if the concentration x of HCl in the solution is chosen to be x < $x_2$ where $x_2$ is the concentration x of HCl at which f(x) is equal to f(x)=2*{f(x=0)}, the etching solution can etch glass substrates so smoothly and uniformly that the increment of micro-roughness with the increase of etching amount is inhibited.

To the HF-based etching solution containing HF at 1.0 mol/kg, $HNO_3$ or $H_2SO_4$ was added instead of HCl and the same type of experiment was carried out. It was found that those acids have the same effect as HCl.

If an HF-based etching solution to which HCl is added such that the concentration x of HCl in the solution is adjusted as above, that is, the solution is applied to a heated silicon oxide film having a certain thickness at 23°C, the etching rate f(x) [Å/min] is plotted as a function of the concentration x [mol/kg] of HCl in the solution, and, when it is found that f(x) takes a minimum when x = $x_1$, and f($x_2$) or the etching rate when x = $x_2$ is equal to f(x)=2*{f(x=0)}, the concentration x of HCl in the solution is adjusted to be (2/5)*$x_1$ < x < $x_2$, and if such an HCl-added HF-based solution is applied to glass substrates containing multiple ingredients like those used for the construction of flat panel display devices, the solubility of salts of cations derived from the glass substrates to the solution is enhanced, and increment of micro-roughness with the increase of etching amount inhibited. Thus, with such an etching solution, it is possible to uniformly etch glass substrates containing multiple ingredients without evoking crystal precipitation and surface roughness.

Industrial Applicability

According to the present invention, it is possible to process glass substrates containing multiple ingredients as those used for the construction of LC-based or organic EL-based flat panel display devices without evoking crystal precipitation and surface roughness.

An etching solution according to the present invention can also be used for cleaning filters. If a conventional etching solution is used for etching glass substrates, the solution will contain fluorides of cations derived from the glass substrates as precipitates. The etching solution is then passed through a filter to remove fluorides. However, after repeated use, the filter becomes clogged. If such a filter is rinsed with an etching solution of the invention, fluorides depositing on the fiber network of the filter will dissolve in the solution and the filter be cleaned sufficiently to be reused.

If an acid-added etching solution in which the concentration of the acid is adjusted according to the present invention is applied to glass substrates containing multiple ingredients, uniform etching of the surface of the substrates is achieved without causing surface roughness. Therefore, if the surface of glass substrates which has been etched by means of an etching solution prepared according to the invention is inspected, and it is found to exhibit considerable roughness, it is possible to conclude that the glass substrate has a certain inherent flaw such as entrapped air bubbles. As seen from above, it is possible to identify glass substrates having an inherent flaw, by checking the surface roughness of the substrates after etching them by means of an etching solution prepared according to the invention.

## Claims

1. A surface treatment solution for finely processing a glass substrate containing multiple ingredients which contains, in addition to F$^-$ ions, at least one acid whose dissociation constant is larger than that of hydrofluoric acid (HF).

2. A surface treatment solution for finely processing a glass substrate containing multiple ingredients which contains, in addition to HF, at least "one acid whose dissociation constant is larger than that of HF".

3. A surface treatment solution for finely processing a glass substrate containing multiple ingredients which contains, in addition to HF, at least one acid whose dissociation constant is larger than that of HF such that, if the solution is applied to a heated silicon oxide film having a certain thickness, and the etching rate f(x) [Å/min] is plotted as a function of the concentration x [mol/kg] of the acid in the solution, and it is found that f(x) takes a minimum $f(x_1)$ when $x = x_1$, the concentration x of the acid in the solution is adjusted to be $x > x_1$.

4. A surface treatment solution for finely processing a glass substrate containing multiple ingredients which contains, in addition to HF, at least one acid whose dissociation constant is larger than that of HF such that, if the solution is applied to a heated silicon oxide film having a certain thickness, and the etching rate f(x) [Å/min] is plotted as a function of the concentration x [mol/kg] of the acid in the solution, and it is found that f(x) takes a minimum $f(x_1)$ when $x = x_1$, the concentration x of the acid in the solution is adjusted to be $x > (2/5)*x_1$.

5. A surface treatment solution for finely processing a glass substrate containing multiple ingredients which contains, in addition to HF, at least one acid whose dissociation constant is larger than that of HF such that, if the solution is applied to a heated silicon oxide film having a certain thickness, and the etching rate f(x) [Å/min] is plotted as a function of the concentration x [mol/kg] of the acid in the solution, and it is found that $f(x_2)$ or the etching rate when $x = x_2$ is equal to $f(x=0)=\{f(x_2)\}/2$, the concentration x of the acid in the solution is adjusted to be $x < x_2$.

6. A surface treatment solution for finely processing a glass substrate containing multiple ingredients which contains, in addition to HF, at least one acid whose dissociation constant is larger than that of HF such that, if the solution is applied to a heated silicon oxide film having a certain thickness, the etching rate f(x) [Å/min] is plotted as a function of the concentration x [mol/kg] of the acid in the solution, and it is found that f(x) takes a minimum $f(x_1)$ when $x = x_1$, and $f(x_2)$ or the etching rate when $x = x_2$ is equal to $f(x=0)=\{f(x_2)\}/2$ $(x_1 < x_2)$, the concentration x of the acid in the solution is adjusted to be

$$(2/5)*x_1 < x < x_2.$$

7. A surface treatment solution as described in any one of Claims 1 to 6 for finely processing a glass substrate containing multiple ingredients in a uniform mixture, in addition to HF, at least one inorganic acid either monovalent or multivalent whose dissociation constant is larger than that of HF.

8. A surface treatment solution as described in any one of Claims 1 to 6 for finely processing a.glass substrate containing multiple ingredients wherein the acid whose dissociation constant is larger than that of HF is one or more chosen from the group comprising HCl, HBr, $HNO_3$, and $H_2SO_4$.

9. A surface treatment solution as described in any one of Claims 1 to 8 for finely processing a glass substrate containing multiple ingredients which further contains a surfactant at 0.0001 to 1 wt%.

10. A surface treatment solution as described in any one of Claims 1 to 9 for finely processing a glass substrate containing multiple ingredients, particularly a glass substrate which contains, in addition to silicates or its main ingredient, one or more elements chosen from the group comprising Al, Ba, Ca, Mg, Sb, Sr and Zr.

11. A surface treatment solution as described in any one of Claims 1 to 10 for finely processing a glass substrate containing multiple ingredients, particularly a glass substrate used for the construction of a flat panel display device.

12. A surface treatment solution as described in any one of Claims 1 to 11 for finely processing a glass substrate containing multiple ingredients which contains HF at 8 mol/kg or lower.

Fig.1

Fig.2

Fig.3

Fig.4

Fig.5

## INTERNATIONAL SEARCH REPORT

International application No.

PCT/JP02/08868

A. CLASSIFICATION OF SUBJECT MATTER
Int.Cl$^7$ C03C15/00, H01L21/308, H05B33/02, H05B33/10

According to International Patent Classification (IPC) or to both national classification and IPC

B. FIELDS SEARCHED

Minimum documentation searched (classification system followed by classification symbols)
Int.Cl$^7$ C03C15/00-23/00, H01L21/306-308, H05B33/02, H05B33/10

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 52-144020 A (Daini Seikosha Kabushiki Kaisha), 01 December, 1977 (01.12.77), Claims; table 1 (Family: none) | 1-12 |
| X | US 4555304 A (Erich SALZLE), 26 November, 1985 (26.11.85), | 1,2,7,8,10, 12 |
| A | Claims; examples 1 to 8 & JP 59-92945 A Claims; examples 1 to 8 & PT 77479 A & DD 212725 A & ES 8500612 A1 & CS 8307499 A & EP 106301 B1 | 3-6,9,11 |

[X] Further documents are listed in the continuation of Box C.  [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
25 November, 2002 (25.11.02)

Date of mailing of the international search report
10 December, 2002 (10.12.02)

Name and mailing address of the ISA/
Japanese Patent Office

Authorized officer

Facsimile No.

Telephone No.

Form PCT/ISA/210 (second sheet) (July 1998)

<table>
<tr><td colspan="3">INTERNATIONAL SEARCH REPORT</td><td>International application No.<br>PCT/JP02/08868</td></tr>
</table>

**C (Continuation). DOCUMENTS CONSIDERED TO BE RELEVANT**

| Category* | Citation of document, with indication, where appropriate, of the relevant passages | Relevant to claim No. |
|---|---|---|
| X<br>A | JP 7-215736 A (Hoya Corp.),<br>15 August, 1995 (15.08.95),<br>Claims<br>(Family: none) | 1,2,7,8,12<br>3-6,9-11 |
| X<br><br>A | EP 1086931 A1 (Nippon Sheet Glass Co., Ltd.),<br>28 March, 2001 (28.03.01),<br>Claims; tables 3 to 4<br>& CN 1297219 A & KR 2001-070107 A | 1,2,7,8,<br>10-12<br>3-6,9 |
| P,X<br><br>P,A | JP 2002-237030 A (Nippon Sheet Glass Co., Ltd.),<br>23 August, 2002 (23.08.02),<br>Claims; examples 1 to 9<br>(Family: none) | 1,2,7,8,10,<br>12<br>3-6,9,11 |

Form PCT/ISA/210 (continuation of second sheet) (July 1998)